# EUROPEAN PATENT APPLICATION

(11) **EP 2 290 552 A1**
(43) Date of publication of application: **02.03.2011**
(21) Application number: 08765039.6
(22) Date of filing: 03.06.2008
(51) Int. Cl.: G06F 13/362

(54) **DATA TRANSFER DEVICE, INFORMATION PROCESSING DEVICE, AND CONTROL METHOD**

(71) Applicant: Fujitsu Limited, Kawasaki-shi, Kanagawa 211-8588 (JP)
(72) Inventor: OSANO, Hidekazu, Kawasaki-shi Kanagawa 211-8588 (JP); KINOSHITA, Takayuki, Kawasaki-shi Kanagawa 211-8588 (JP); IWAMI, Yoshikazu, Kawasaki-shi Kanagawa 211-8588 (JP); HATAIDA, Makoto, Kawasaki-shi Kanagawa 211-8588 (JP)
(74) Representative: Holz, Ulrike
(86) International application number: PCT/JP2008/060226
(87) International publication number: WO 2009/147731

(57) **Abstract**

A data transfer device (300) includes a plurality of input queues (310), a plurality of arbitration control circuits (320) provided for the respective input queues (310), and an input queue selection circuit (330) that selects any one of the input queues based on a priority set for each input queue and outputs data from the selected input queue (310). Each arbitration control circuit includes a register (321) that stores therein a predetermined upper limit, a counter (325) that counts the amount of data output from a corresponding input queue, and a control circuit (324) that causes the input queue selection circuit to update the priority and reset the value of the counter when the value of the counter becomes equal to or greater than the upper limit stored in the register.

## Description

### TECHNICAL FIELD

The present invention relates to a data transfer device, an information processing apparatus, and a control method, and particularly to a data transfer device, an information processing apparatus, and a control method capable of equalizing the throughput of each transmission source even when the size of packets (data) is not uniform, and preventing a situation in which a packet (data) in any of transmission sources is not selected.

### BACKGROUND ART

An information processing apparatus has been known that includes a plurality of arithmetic processing modules such as system boards, each including a CPU (Central Processing Unit) and a RAM (Random Access Memory), and a plurality of input-output modules, each including various input-output devices and various input-output interfaces, and that is constructed by connecting these modules to one another via a high-speed switch. In the information processing apparatus having such a configuration, conflicts are arbitrated between command packets or data packets to be output from the plurality of modules to the switch.

In general, arbitration of packet conflicts is performed by the round robin method. The round robin method is kind of a method in which when a packet output from a certain module is selected, the priority of this module is lowered to the lowest, and the priorities of the other modules are raised. The round robin method can easily be implemented; however, it has a problem in that the throughput of each module varies when the size of the packets to be output is not uniform.

That is, in the round robin method, because the number of packets allowed to be output per unit time is approximately uniform for all of the modules, the throughput of a module that outputs more packets with larger size is increased while a throughput of a module that outputs more packets with smaller size is relatively decreased. To solve this problem, in the field of a communication device such as a router device or the like, the Deficit Round Robin (DRR) method or a modified DRR method is sometimes used to arbitrate the packet conflicts.

The DRR method is a method in which a queue and a counter are provided for each packet output source, a predetermined value d is added to each counter, and a packet to be selected is determined by comparing the value of the counter with the size of the head packet of the queue. The head packet of each queue is selected when the value of a corresponding queue is increased to greater than the size of the head packet, and at this time, the value of the corresponding queue is decreased by the size of the selected head packet. In the DRR method, because the size of the packets is taken into account, the throughput of each module can be equalized even when the size of the packets to be output is not uniform.

Patent Document 1: Japanese Laid-open Patent Publication No. 2001-217868
Patent Document 2: Japanese Laid-open Patent Publication No. 2001-223740

### DISCLOSURE OF INVENTION

### PROBLEM TO BE SOLVED BY THE INVENTION

However, the DRR method has a problem in that when the above-mentioned predetermined value d is smaller than an appropriate value, time taken for increasing the value of the counter to greater than the size of the head packet increases, so that a situation occurs in which a packet in any of the output sources is not selected. In the information processing apparatus which performs operation at higher speed than communication devices such as router devices or the like, the occurrence of the situation in which a packet in any of the modules is not selected even when a plurality of modules attempting to output a packet is present leads to significant performance degradation, which needs to be prevented.

The present invention has been made to solve the above problems in the conventional technology and it is an object of the present invention to provide a data transfer device, an information processing apparatus, and a control method capable of equalizing the throughput of each transmission source even when the size of packets (data) is not uniform and preventing the situation in which a packet (data) in any of the transmission sources is not selected.

### MEANS FOR SOLVING PROBLEM

To solve the problems and achieve the object mentioned above, according to one aspect of the present invention, a data transfer device and an information processing apparatus includes: a plurality of input queues; a plurality of arbitration control units provided for the respective input queues; and an input queue selecting unit that selects any one of the input queues based on a priority set for each input queue, and outputs data from the selected input queue, wherein each arbitration control unit includes a register that stores therein a predetermined upper limit; a counter that counts the amount of data output from a corresponding input queue; and a control circuit that, when a value of the counter becomes equal to or greater than the upper limit stored in the register, causes the input queue selecting unit to update the priority and resets the value of the counter.

Furthermore, according to another aspect of the present invention, data is output from the input queue, and arbitration is performed based on the amount of the output data. Therefore, it is possible to equalize the throughput of each transmission source even when the data size is not uniform, and it is also possible to prevent a situation in which data in any of the transmission sources is not selected.

Moreover, embodiments of applying components, expressions, or arbitrary combinations of components of the data transfer device and the information processing apparatus of the present invention to a method, an apparatus, a system, a computer program, a recording medium, a data structure, and the like are also valid as an aspect of the present invention.

### EFFECT OF THE INVENTION

According to one aspect of the data transfer device, the information processing apparatus, and the control method of the present invention, it is possible to equalize the throughput of each transmission source even when the data size is not uniform, and it is also possible to prevent a situation in which data in any of the transmission sources is not selected.

### BRIEF DESCRIPTION OF DRAWINGS

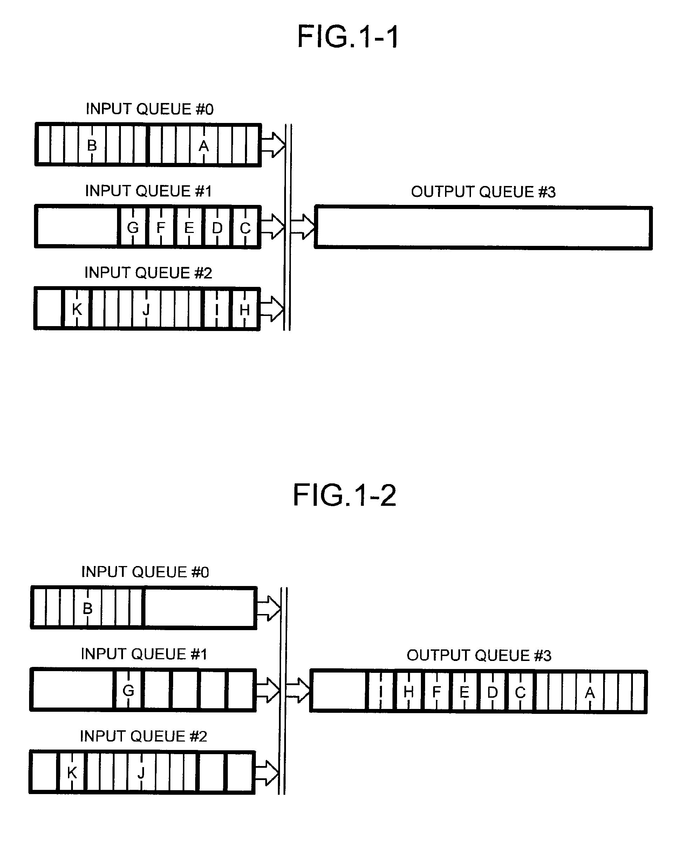

FIG. 1-1 is a diagram illustrating an example of data packets stored in input queues.
FIG. 1-2 is a diagram illustrating an example of selection of data packets by an arbitration method according to an embodiment.
FIG. 2-1 is a diagram illustrating an example of command packets stored in input queues.
FIG. 2-2 is a diagram illustrating an example of selection of command packets by the arbitration method according to the embodiment.
FIG. 3 is a diagram illustrating an example of a configuration of an information processing apparatus according to the embodiment.
FIG. 4 is a diagram illustrating an example of a configuration of a data transfer device illustrated in FIG. 3.
FIG. 5 is a flowchart illustrating an operation of an input queue selection circuit.
FIG. 6 is a flowchart illustrating an operation of an output-data-amount measurement circuit.
FIG. 7 is a diagram illustrating an example of a configuration of the output-data-amount measurement circuit.
FIG. 8 is a diagram illustrating an example of a configuration of the input queue selection circuit.
FIG. 9 is a diagram illustrating an example of selection of data packets by a conventional arbitration method.
FIG. 10 is a diagram illustrating an example of selection of command packets by the conventional arbitration method.

### EXPLANATIONS OF LETTERS OR NUMERALS

10 System board (SB)
11 CPU
12 CPU control unit
13 Memory control unit
14 RAM
15 FWH
20 IO board (IOB)
21 IO control unit
22 PCI control unit
23 PCI interface
24 ICH
31 Data crossbar
32 Address crossbar
300 Data transfer device
310 Input queue
320 Arbitration control circuit
321 Upper-limit set register
322 JTAG circuit or SMBus circuit
323 Packet length decoder circuit
324 Output-data-amount measurement circuit
324a, 324b, 324d, 324e AND circuit
324c, 324f Addition instruction circuit
324g Comparator
324h Reset instruction circuit
324i OR circuit
325 Output-data-amount measurement counter
330 Input queue selection circuit
331a to 331c Pointer update circuit
332 Highest priority pointer
333 Round-robin circuit
334 OR circuit
335 Selector
336 Packet length counter
337a to 337c Selection period generation circuit
340 Selector
350 Output queue

### BEST MODE(S) FOR CARRYING OUT THE INVENTION

Preferred embodiments of a data transfer device, an information processing apparatus, and a control method according to the present invention will be described in detail below with reference to the accompanying drawings. The present invention is not limited by the embodiments.

### Embodiment

First of all, the outline of an arbitration method according to an embodiment is explained below by comparison with a conventional arbitration method. FIG. 1-1 is a diagram illustrating an example of data packets stored in input queues. This example illustrates a situation in which packets stored in input queues #0 to #2 are selected by a selector and then output to an output queue #3. The input queues #0 to #2 are queues for temporarily storing packets output from different output sources.

In this example, a data packet of 32 bytes made up of a header portion of 8 bytes and a data portion of 24 bytes and a data packet of 8 bytes made up of a header portion of 4 bytes and a data portion of 4 bytes are mixed. Packets A and B, each of which is of 32 bytes, are stored in the input queue #0. Packets C to G, each of which is of 8 bytes, are stored in the input queue #1. Packets H and I, each of which is of 8 bytes, a packet J of 32 bytes, and a packet K of 8 bytes are stored in the input queue #2.

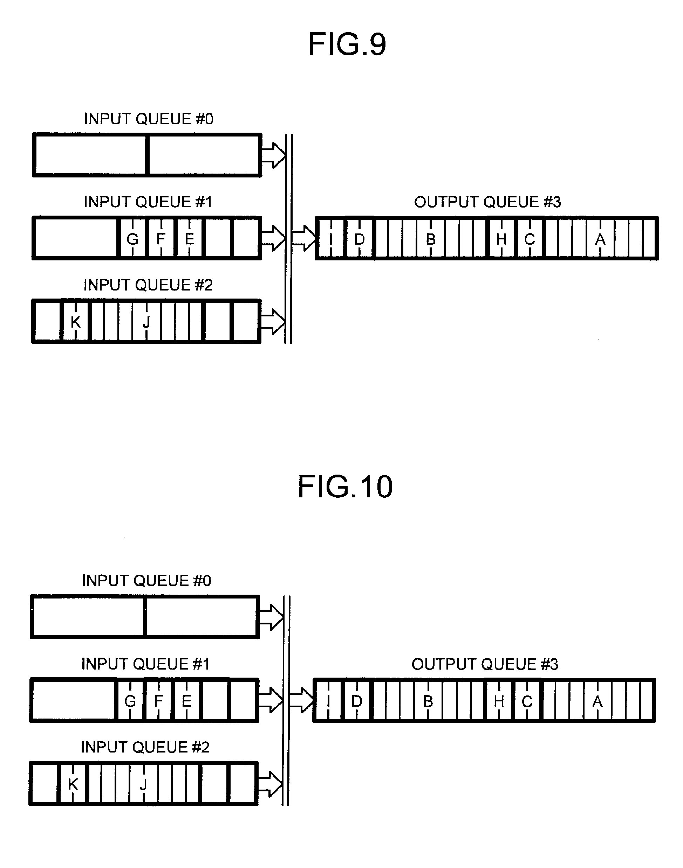

FIG. 9 is a diagram illustrating an example of selection of data packets by the conventional arbitration method. In the situation illustrated in FIG. 1-1, if the simple round-robin method is used to cyclically change the highest-priority input queue in order of #0 → #1 → #2 → #0 → #1 → #2, the packet A in the input queue #0 is firstly selected and stored in the output queue #3 as illustrated in the example. Subsequently, the packet C in the input queue #1, the packet H in the input queue #2, the packet B in the input queue #0, the packet D in the input queue #1, and the packet I in the input queue #2 are selected in this order, and are stored in the output queue #3.

In this example, the packets of 64 bytes in total are selected from the input queue #0, whereas only the packets of 16 bytes in total are selected from each of the input queues #1 and #2 during the same period. In this manner, in the conventional arbitration method, the data size selected per unit time varies between the input queues depending on a difference in size between the output packets.

It is possible to employ the deficit round-robin method in order to perform control so that the data size selected per unit time can be made uniform for all of the input queues. In this case, however, if the setting is not appropriate, a situation may occur in which a packet in any of the input queues is not selected even when a packet that can be output is present.

FIG. 1-2 is a diagram illustrating an example of selection of data packets by the arbitration method according to the embodiment. In the arbitration method according to the embodiment, the priority of each input queue is changed depending on the size of a packet that is already selected. More specifically, in the arbitration method according to the embodiment, when a packet in a certain input queue is selected, counting of the size of the packet output from the input queue is started, and packets in the input queue are continuously selected until the count value becomes equal to or greater than an upper limit that is set in advance or until no packets that can be output from the input queue remain. When the count value becomes equal to or greater than the upper limit that is set in advance or when no packets that can be output from the input queue remain, the priority of the input queue is lowered to the lowest, and packets in the other input queues are to be selected.

In this method, by setting the identical value to the upper limit set for each input queue, it is possible to equalize the data size selected per unit time for all of the input queues. Furthermore, in this method, the start of output is not determined based on the size of a packet precedent to a packet to be output from the input queue, whereas output of a packet that can be output is firstly started and then stop of the output is determined based on the size of the output packet. Therefore, the situation does not occur in which a packet in any of the input queues is not selected even when a packet that can be output is present.

In the example illustrated in FIG. 1-2, 32-byte is set as the upper limit for each queue. Therefore, during a period in which the highest-priority input queue is cyclically changed in order of #0 → #1 → #2, the packet A is selected from the input queue #0, the packets C to F are selected from the input queue #1, and the packets H and I are selected from the input queue #2. As apparent from the comparison between FIG. 9 and FIG. 1-2, the data size selected per unit time is closer to uniform in the arbitration method according to the embodiment than in the conventional arbitration method.

In the arbitration method according to the embodiment, by setting a different value to the upper limit set for each input queue, the data size selected per unit time can purposely be differentiated between the input queues. For example, it is possible to set a large value as the upper limit to the input queue that stores therein a packet to be output from an output source that needs a high throughput, so that the amount of data to be selected per unit time can be increased.

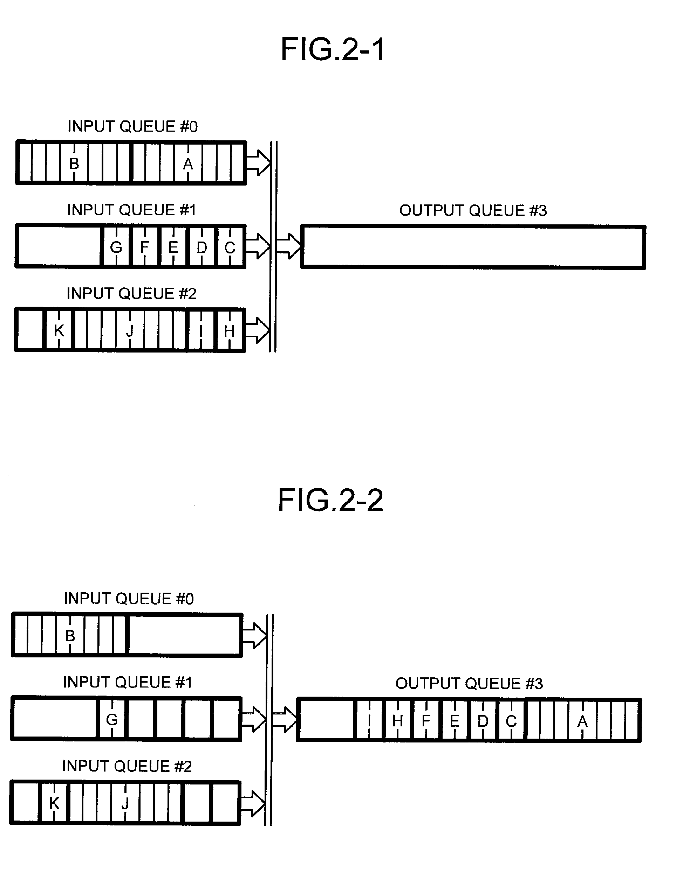

In the above explanation, the arbitration method according to the embodiment and the conventional arbitration method are compared with each other in terms of the arbitration of data packets. However, the arbitration method according to the embodiment is also valid for arbitration of command packets. That is, as illustrated in FIG. 2-1, when a command packet of a relatively large size, such as a write command for an IO, and a command packet of a relatively small size, such as a read command for a memory, are mixed, and if the conventional arbitration method using the simple round-robin method is employed, the packet size selected per unit time varies between the input queues as illustrated in FIG. 10. In contrast, in the arbitration method according to the embodiment, as illustrated in FIG. 2-2, the packet size selected per unit time can be made nearly uniform.

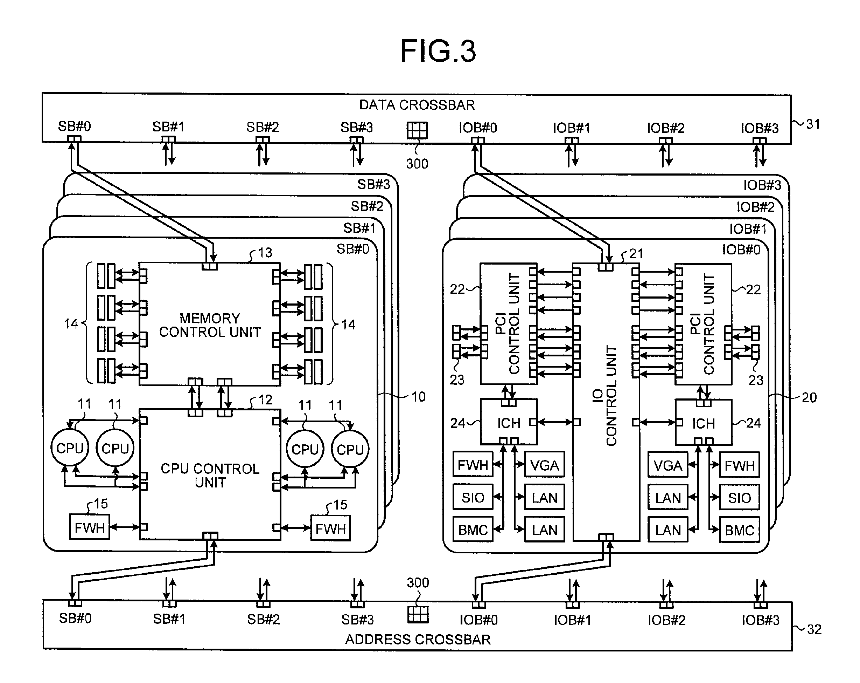

Next, the configurations of the data transfer device that performs the arbitration method according to the embodiment and an information processing apparatus that includes the data transfer device are explained. FIG. 3 is a diagram illustrating an example of the configuration of the information processing apparatus according to the embodiment. As illustrated in FIG. 3, the information processing apparatus according to the embodiment includes a plurality of system boards (hereinafter, abbreviated as "SBs") 10, a plurality of IO boards (hereinafter, abbreviated as "IOBs") 20, a data crossbar 31, and an address crossbar 32.

Each SB 10 is an arithmetic processing module that performs arithmetic processing, and includes CPUs 11, a CPU control unit 12, a memory control unit 13, RAMs 14, FWHs (FirmWare Hubs) 15, and the like. Each CPU 11 is an arithmetic circuit that performs various calculations, and the CPU control unit 12 is a circuit that arbitrates conflicts between requests of the plurality of CPUs 11 and sorts the requests of the CPUs 11 into the memory control unit 13 or the IOBs 20. The memory control unit 13 is a circuit that controls access to each RAM 14, and each RAM 14 is a storage circuit for temporarily storing information. Each FWH 15 is a storage circuit for storing firmware.

Each IOB 20 is an input-output module that performs various input-output control other than memory access, and includes an IO control unit 21, PCI (Peripheral Component Interconnect) control units 22, PCI interfaces 23, and ICHs (IO Controller Hubs) 24. The IO control unit 21 is a circuit that controls the IOB 20 as a whole, and each PCI control unit 22 is a circuit that controls various PCI devices connected to the PCI interfaces 23. Each ICH 24 is a circuit that controls a network interface (LAN: Local Area Network), a screen control device (VGA: Video Graphics Array), a serial input-output control device (SIO: Serial Input Output), a baseboard management device (BMC: Baseboard Management Controller), and the like mounted on the IOB 20.

The data crossbar 31 and the address crossbar 32 are connection modules that electrically connect the plurality of SBs 10 and the plurality of IOBs 20. Each of the data crossbar 31 and the address crossbar 32 includes a data transfer device 300 as a high-speed switch.

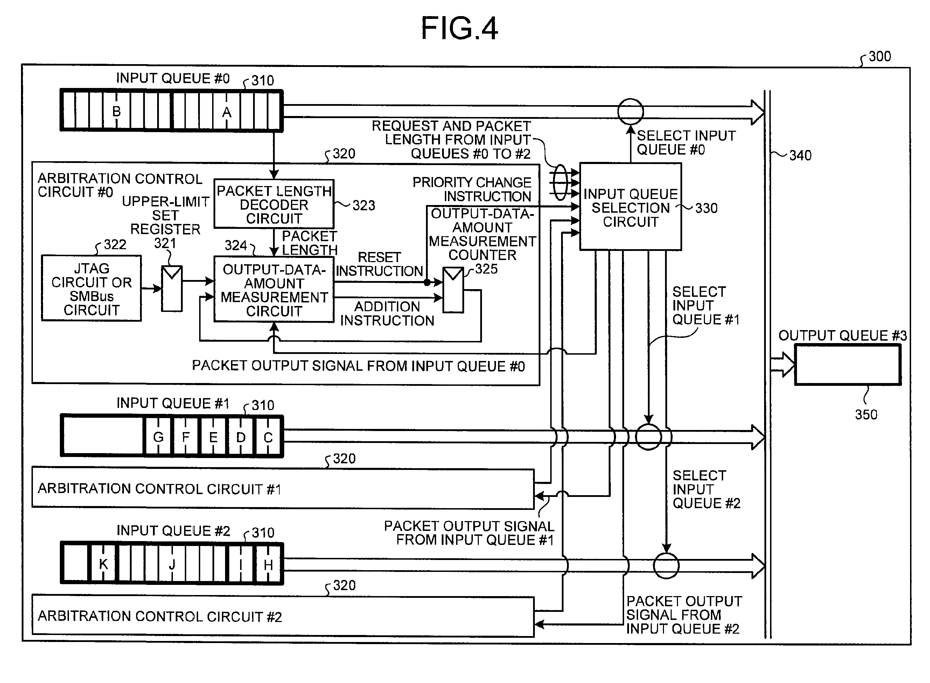

FIG. 4 is a diagram illustrating an example of the configuration of the data transfer device 300 illustrated in FIG. 3. In the following, for simplicity of explanation, only components related to the arbitration are illustrated. Furthermore, a data packet and a command packet are not distinguished from each other.

As illustrated in FIG. 4, the data transfer device 300 includes a plurality of sets of an input queue 310 and an arbitration control circuit 320, an input queue selection circuit 330, a selector 340, and an output queue 350. Each input queue 310 is a queue for temporarily storing a packet output from a certain module. Each arbitration control circuit 320 is a circuit that is provided for a corresponding input queue 310, monitors the amount of data output from the corresponding input queue 310, and includes an upper-limit set register 321, a JTAG circuit or SMBus circuit 322, a packet length decoder circuit 323, an output-data-amount measurement circuit 324, and an output-data-amount measurement counter 325.

The upper-limit set register 321 stores therein the upper limit of the amount of data to be output. Because the upper-limit set register 321 is provided for each input queue 310, the value of the upper limit of the amount of data to be output can be differentiated between the input queues 310, or can be made uniform for all of the input queues 310. The JTAG circuit or SMBus circuit 322 is a circuit for setting the upper limit for the upper-limit set register 321 by an external apparatus.

The packet length decoder circuit 323 is a circuit that acquires the size of a head packet of the corresponding input queue 310. The size of the packet can be acquired by referring to a predetermined position of a header portion of the packet.

The output-data-amount measurement circuit 324 adds the size of the head packet, which is acquired by the packet length decoder circuit 323, to the output-data-amount measurement counter 325 every time it receives a signal indicating that the head packet of the corresponding queue is to be selected. Then, when the value of the output-data-amount measurement counter 325 after the addition becomes equal to or greater than the value of the upper-limit set register 321, the output-data-amount measurement circuit 324 resets the value of the output-data-amount measurement counter 325, and instructs the input queue selection circuit 330 to change the priority of the input queues. Furthermore, when receiving a signal indicating that no packets that can be output remain in the corresponding queue after receiving the signal indicating the that head packet of the corresponding queue is to be selected, the output-data-amount measurement circuit 324 resets the value of the output-data-amount measurement counter 325 and instructs the input queue selection circuit 330 to change the priority of the input queues. The output-data-amount measurement counter 325 stores therein the amount of the output data.

The input queue selection circuit 330 selects the head packet of any one of the input queues 310 based on the order of priority, outputs the head packet to the selector 340, and transmits a signal indicating selection of the head packet to the output-data-amount measurement circuit 324 corresponding to the input queue in which the packet is stored. The selector 340 stores the packet output from the input queue 310 in the output queue 350. The output queue 350 is a queue for temporarily storing a packet.

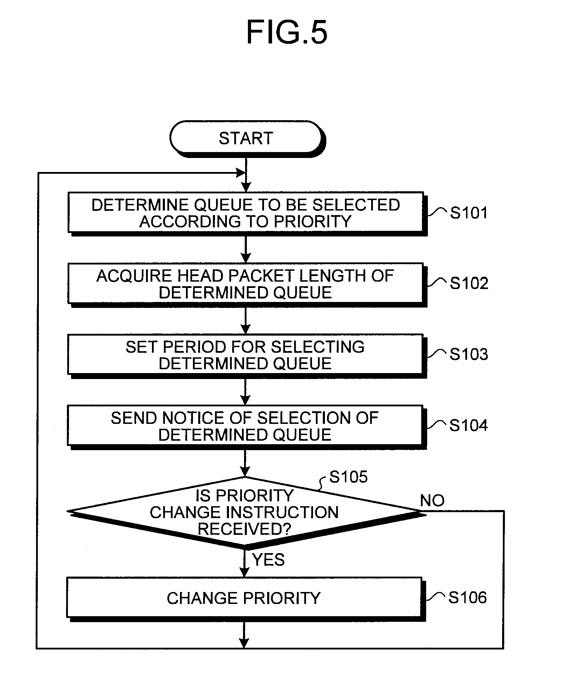

Next, the operation of the data transfer device 300 illustrated in FIG. 4 is explained. FIG. 5 is a flowchart illustrating the operation of the input queue selection circuit 330. As illustrated in FIG. 5, the input queue selection circuit 330 determines a queue to be selected from among the input queues 310, in each of which packets that can be output are stored, according to the priority (Step S101).

Subsequently, the input queue selection circuit 330 acquires the length of the head packet of the determined input queue 310 (Step S102). Then, the input queue selection circuit 330 obtains a period needed for outputting the head packet based on the acquired packet length, and makes a setting so that the determined input queue 310 can be being selected during the period (Step S103). Furthermore, the input queue selection circuit 330 transmits, to the output-data-amount measurement circuit 324 corresponding to the input queue 310, a signal for notifying that the head packet of the determined input queue 310 is to be output (Step S104).

Furthermore, when instructed to change the priority of the input queues by the output-data-amount measurement circuit 324 (YES at Step S105), the input queue selection circuit 330 updates the priority so that the priority of the input queue 310 corresponding to the output-data-amount measurement circuit 324 becomes the lowest (Step S106). The input queue selection circuit 330 repeatedly performs the procedure from Step S101 to Step S106 described above. The procedure form Step S101 to Step S104 and the procedure from Step S105 to Step S106 need not be performed in this order, and each procedure can be performed independently and in an asynchronous manner.

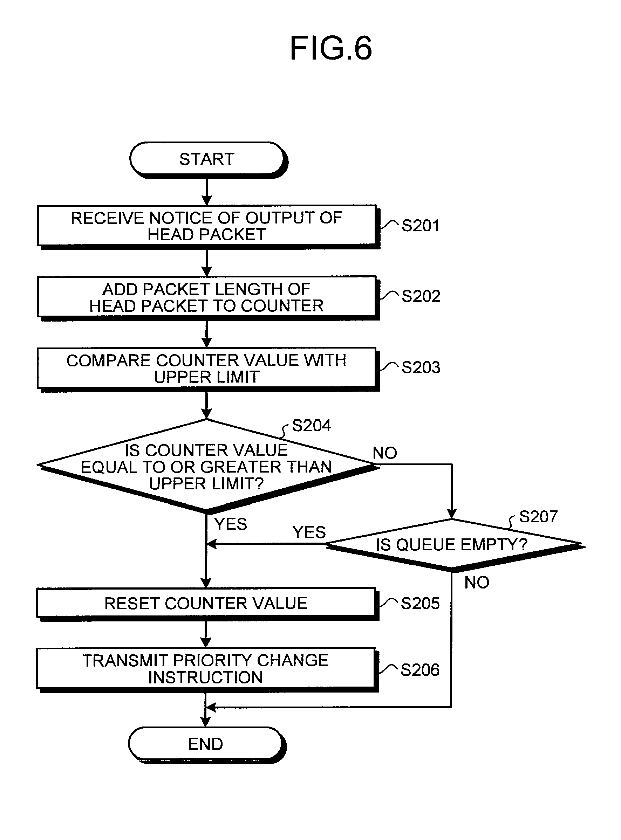

FIG. 6 is a flowchart illustrating the operation of the output-data-amount measurement circuit 324. As illustrated in the figure, when receiving the signal indicating that the head packet of the corresponding input queue 310 is to be selected (Step S201), the output-data-amount measurement circuit 324 adds the packet length of the head packet to the output-data-amount measurement counter 325 (Step S202).

Then, the value of the output-data-amount measurement counter 325 after the addition is compared with the upper limit stored in the upper-limit set register 321 (Step S203). When the value after the addition is equal to or greater than the upper limit (YES at Step S204), the output-data-amount measurement circuit 324 resets the value of the output-data-amount measurement counter 325 (Step S205), and instructs the input queue selection circuit 330 to change the priority of the input queues (Step S206).

On the other hand, when the value after the addition is smaller than the upper limit (NO at Step S204), and if the signal indicating that no packets that can be output remain in the corresponding input queue is received (YES at Step S207), the output-data-amount measurement circuit 324 resets the value of the output-data-amount measurement counter 325 (Step S205), and instructs the input queue selection circuit 330 to change the priority of the input queues (Step S206).

The input queue selection circuit 330 performs the procedure from Step S201 to Step S207 described above every time it receives the signal indicating that the head packet of the corresponding input queue 310 is to be selected.

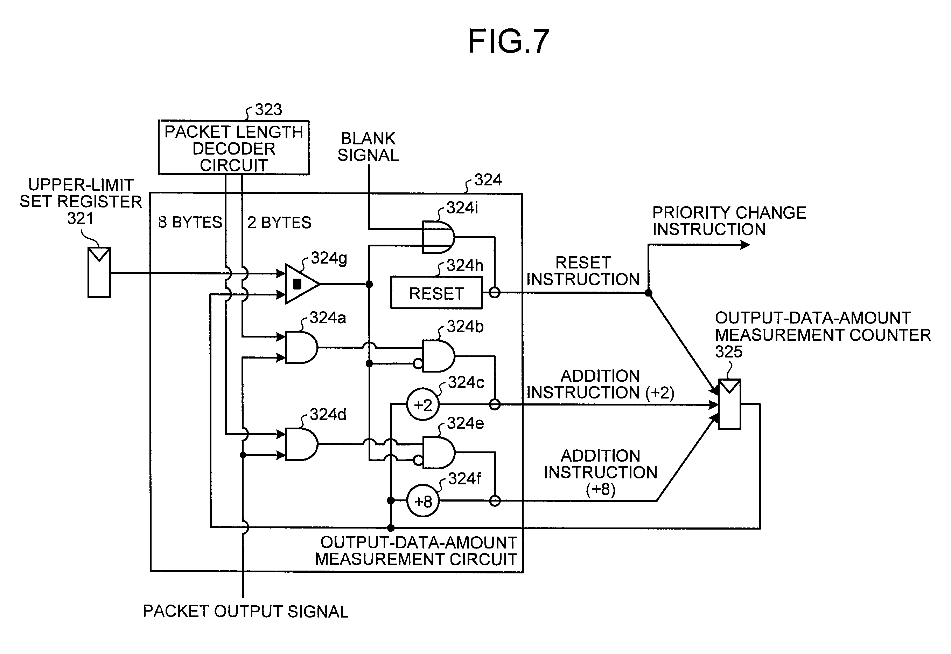

Next, the configurations of the output-data-amount measurement circuit 324 and the input queue selection circuit 330 for realizing the above operations are explained. FIG. 7 is a diagram illustrating an example of the configuration of the output-data-amount measurement circuit 324. In this example, for simplicity of explanation, it is assumed that the packet length is either 2 bytes or 8 bytes. However, the packet length is not limited to these two types.

In the configuration illustrated in FIG. 7, when a packet output signal indicating that the head packet is to be selected is received, and if a signal indicating that the size of the head packet is 2 bytes is transmitted from the packet length decoder circuit 323, the output of an AND circuit 324a turns ON. When the output of the AND circuit 324a turns ON and a signal indicating that the upper limit is equal to or greater than the counter value is not output form a comparator 324g that compares the upper limit set in the upper-limit set register 321 with the value of the output-data-amount measurement counter 325, the output of an AND circuit 324b also turns ON. When the output of the AND circuit 324b turns ON, an addition instructing circuit 324c transmits an addition instruction for increment of 2 to the output-data-amount measurement counter 325.

Furthermore, when the packet output signal indicating that the head packet is to be selected is received and if a signal indicating that the size of the head packet is 8 bytes is transmitted from the packet length decoder circuit 323, the output of an AND circuit 324d turns ON. When the output of the AND circuit 324d turns ON and the signal indicating that the upper limit is equal to or greater than the counter value is not output from the comparator 324g, the output of an AND circuit 324e also turns ON. When the output of the AND circuit 324e turns ON, an addition instruction circuit 324f transmits an addition instruction for increment of 8 to the output-data-amount measurement counter 325.

Furthermore, when the signal indicating that the upper limit is equal to or greater than the counter value is output from the comparator 324g, the output of an OR circuit 324i turns ON. Furthermore, when a blank signal indicating that no packets that can be output remain in the corresponding input queue 310 is received, the output of the OR circuit 324i turns ON. When the output of the OR circuit 324i turns ON, a reset instruction circuit 324h transmits a reset instruction to the output-data-amount measurement counter 325, and also transmits a priority change instruction to the input queue selection circuit 330.

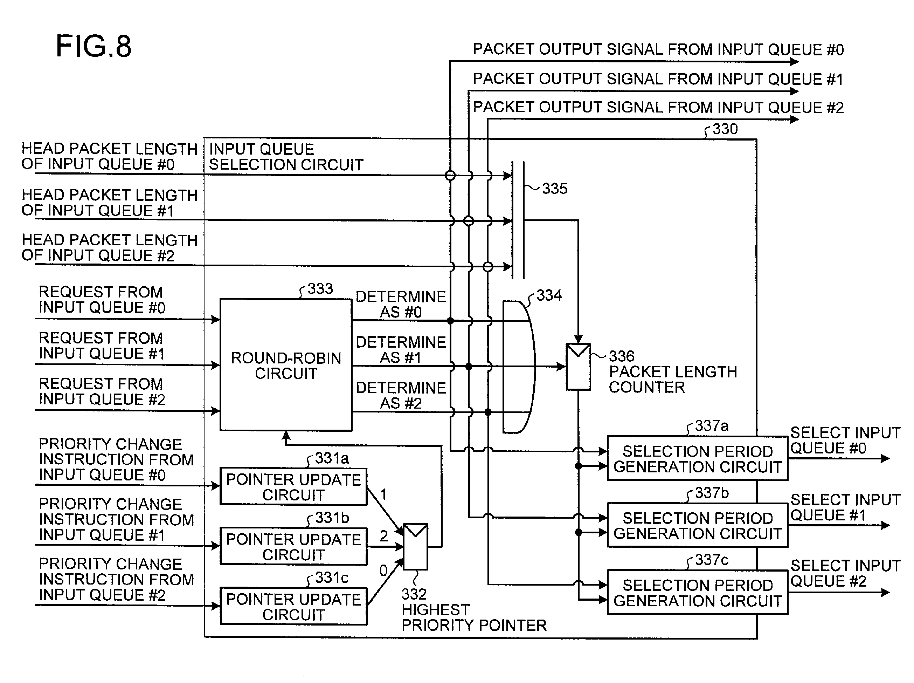

FIG. 8 is a diagram illustrating an example of the configuration of the input queue selection circuit 330. In this example, for simplicity of explanation, it is assumed that there are three input queues 310 respectively identified by #0 to #2. However, the number of the input queues 310 is not limited to three.

In the configuration illustrated in FIG. 8, when the priority change instruction is received from the arbitration control circuit 320 corresponding to the input queue 310 of #0, a pointer update circuit 331a updates the value of a highest priority pointer 332 to #1. Furthermore, when the priority change instruction is received from the arbitration control circuit 320 corresponding to the input queue 310 of #1, a pointer update circuit 331b updates the value of the highest priority pointer 332 to #2. Moreover, when the priority change instruction is received from the arbitration control circuit 320 corresponding to the input queue 310 of #2, a pointer update circuit 331c updates the value of the highest priority pointer 332 to #0.

Furthermore, when a request indicating that a packet that can be output is present is received from one or more of the input queues 310, a round-robin circuit 333 determines which one of the input queues 310 that has transmitted the request is to be selected based on the order of priority, in which the highest priority is given to the input queue 310 corresponding to the number set in the highest priority pointer 332, and transmits a packet output signal of the corresponding input queue 310. When the packet output signal of any of the input queues 310 turns ON, the output of an OR circuit 334 turns ON. When the output of the OR circuit 334 turns ON, the length of the head packet of the input queue 310 selected by the round-robin circuit 333 is selected by a selector 335, and stored in a packet length counter 336.

The packet length stored in the packet length counter 336 is output to selection period generation circuits 337a to 337c that generate a select period of the input queue 310 based on the packet length. A selection period generation circuit corresponding to the input queue 310 determined by the round-robin circuit 333 from among the selection period generation circuits 337a to 337c selects the corresponding input queue 310 during the generated period, and transmits to the arbitration control circuit 320 a packet output signal indicating that the head packet is to be selected.

## Claims

1. A data transfer device comprising:
a plurality of input queues;
a plurality of arbitration control units provided for the respective input queues; and
an input queue selecting unit that selects any one of the input queues based on a priority set for each input queue, and outputs data from the selected input queue, wherein
each arbitration control unit includes
a register that stores therein a predetermined upper limit;
a counter that counts the amount of data output from a corresponding input queue; and
a control circuit that, when a value of the counter becomes equal to or greater than the upper limit stored in the register, causes the input queue selecting unit to update the priority and resets the value of the counter.

2. The data transfer device according to claim 1, wherein
the control circuit causes the input queue selecting unit to update the priority and reset the value of the counter when data to be output from a corresponding queue is not remained.

3. The data transfer device according to claim 1, wherein
when selecting any one of the input queues, the input queue selecting unit notifies an arbitration control unit corresponding to the selected input queue of information indicating that the input queue is selected, and
the arbitration control unit causes the counter to start counting in response to the notice from the input queue selecting unit.

4. The data transfer device according to claim 1, wherein each arbitration control unit further includes
a data length acquiring unit that acquires a data length of data stored at the head of a corresponding input queue, and
the counter adds the data length acquired by the data length acquiring unit to thereby count the amount of data output from the corresponding input queue.

5. An information processing apparatus comprising:
a plurality of input queues;
a plurality of arbitration control units provided for the respective input queues; and
an input queue selecting unit that selects any one of the input queues based on a priority set for each input queue, and outputs data from the selected input queue, wherein
each arbitration control unit includes
a register that stores therein a predetermined upper limit;
a counter that counts the amount of data output from a corresponding input queue; and
a control circuit that, when a value of the counter becomes equal to or greater than the upper limit stored in the register, causes the input queue selecting unit to update the priority and resets the value of the counter.

6. The information processing apparatus according to claim 5, wherein
the control circuit causes the input queue selecting unit to update the priority and reset the value of the counter when data to be output from a corresponding queue is not remained.

7. The information processing apparatus according to claim 5, wherein
when selecting any one of the input queues, the input queue selecting unit notifies an arbitration control unit corresponding to the selected input queue of information indicating that the input queue is selected, and
the arbitration control unit causes the counter to start counting in response to the notice from the input queue selecting unit.

8. The information processing apparatus according to claim 5, wherein
each arbitration control unit further includes
a data length acquiring unit that acquires a data length of data stored at the head of a corresponding input queue, and
the counter adds the data length acquired by the data length acquiring unit to thereby count the amount of data output from the corresponding input queue.

9. A control method implemented by an information processing apparatus that includes
a plurality of input queues;
a plurality of arbitration control units provided for the respective input queues; and
an input queue selecting unit that selects one of the input queues based on a priority set for each input queue and outputs data from the selected input queue, the control method comprising:
storing, by each arbitration control unit, the amount of data output from a corresponding input queue; and
controlling, by each arbitration control unit, to cause the input queue selecting unit to update the priority and reset the value of the counter when a value of the counter becomes equal to or greater than an upper limit stored in a register.

10. The control method according to claim 9, further comprising:
controlling, by each arbitration control unit, to cause the input queue selecting unit to update the priority and reset the value of the counter when data to be output from the corresponding input queue is not remained.

11. The control method according to claim 9, further comprising:
notifying, when the input queue selecting unit selects any one of the input queues, an arbitration control unit corresponding to the selected queue of information indicating that the input queue is selected; and
starting, by the arbitration control unit, to store the amount of data in the counter in response to the notice from the input queue selecting unit.

12. The control method according to claim 9, further comprising:
acquiring, by each arbitration control unit, a data length of data stored at the head of a corresponding input queue, wherein
the controlling, by each arbitration control unit, includes counting the amount of data output from the corresponding input queue by adding the data length acquired at the acquiring to the counter.
